# EUROPÄISCHE PATENTANMELDUNG

(11) **EP 0 917 972 A1**
(43) Veröffentlichungstag der Anmeldung: **26.05.1999**
(21) Anmeldenummer: 98119437.6
(22) Anmeldetag: 15.10.1998
(51) Int. Cl.: B60G 21/05

(54) **Verbundlenker-Hinterachse**

(30) Priorität: 20.11.1997 DE 19751459
(71) Anmelder: Volkswagen Aktiengesellschaft, 38436 Wolfsburg (DE)
(72) Erfinder: Reisdorf, Klaus Ing. grad., 38442 Wolfsburg (DE)

(57) **Zusammenfassung**

Die Erfindung betrifft eine Verbundlenker-Hinterachse (1) mit einem biegesteifen und torsionsweichen Querträger (2), wobei an jedem Ende des Querträgers (2) mit Hilfe einer Steckverbindung (3) ein Längsträger (4) angeordnet ist und jeder Längsträger (4) einenends zur Aufnahme eines Radträgers und anderenends zur Anlenkung an einen Fahrzeugaufbau entsprechend ausgebildet ist.

Die Torsionssteifigkeit des Querträgers (2) und damit der Stabilisatoreffekt sind nun dadurch verringert, daß die Steckverbindung (3) als eine Art Gleitführung ausgebildet ist, so daß im Bereich der Steckverbindung (3) eine geringe Verschiebung des Querträgers (2) im wesentlichen in Richtung seiner zur Fahrzeugquerachse korrespondierenden Längsrichtung ermöglicht ist.

## Beschreibung

Die Erfindung betrifft eine Verbundlenker-Hinterachse mit einem biegesteifen und torsionsweichen Querträger, wobei an jedem Ende des Querträgers mit Hilfe einer Steckverbindung ein Längsträger angeordnet ist und jeder Längsträger einenends zur Aufnahme eines Radträgers und anderenends zur Anlenkung an einen Fahrzeugaufbau entsprechend ausgebildet ist.

Die im Stand der Technik bekannte Verbundlenker-Hinterachse, von der die Erfindung ausgeht (DE-A-44 41 971), weist einen Querträger und zwei Längsträger auf. Die beiden Längsträger sind an den jeweiligen gegenüberliegenden Enden des Querträgers entsprechend angeordnet. Weiterhin sind die Längsträger so ausgebildet, daß sie an ihrem einen Ende zur Aufnahme eines Radträgers und an ihrem anderen Ende zur Anlenkung an einen Fahrzeugaufbau entsprechend ausgebildet sind. Damit die auf die Fahrzeugräder einwirkenden Quer- und Längskräfte von der gesamten Verbundlenker-Hinterachse aufgenommen werden können, ist der Querträger zwar biegesteif, aber torsionsweich ausgebildet, wobei die Längsträger derartig mit dem Querträger verbunden sind, so daß gegenüber den Ein- und Ausfederbewegungen der Räder ein Stabilisatoreffekt erreicht werden kann. Im allgemeinen wird der Quer- und jeder Längsträger aus einer Aluminiumlegierung hergestellt, wobei die sich gegenüberliegenden Enden des Querträgers in entsprechende - hierfür vorgesehene - Ausnehmungen des jeweiligen Längsträgers gesteckt werden. Die so ausgebildete Steckverbindung zwischen dem Querträger und dem jeweiligen Längsträger wird dann durch ein entsprechendes Verfahren, insbesondere durch Kleben, Schweißen, Nieten oder einer entsprechenden Verformung, fest miteinander verbunden. Dies wird unterschiedlich gehandhabt und ist insbesondere davon abhängig, ob der Querträger beispielsweise als Strangpreßteil mit halboffenem Profil ausgebildet ist, während der Längsträger als Gußteil oder auch als verripptes Strangpreßprofil ausgebildet sein kann.

Die im Stand der Technik bekannte Verbundlenker-Hinterachse ist nicht optimal ausgebildet. Im allgemeinen sind die äußeren Bereiche des Querträgers so ausgebildet, daß sie in einer nutartigen Führung des jeweiligen Längsträgers aufgenommen werden. Bedingt durch den Werkstoff Leichtmetall mit seinem im Vergleich zu Stahl wesentlichen kleineren E-Modul ist die Breite (Flanschbreite) des Leichtmetallprofils des Querträgers in dessen äußeren Bereich - bei vorgegebener Torsionssteifigkeit - extrem groß. Folglich ergibt sich im Einsatz bei eintretender Torsion eine entsprechend starke Verwölbung der äußeren Bereiche des Querträgers (Flanschbereiche). Diese Verwölbung führt zu einer Verschiebung in Richtung der Fahrzeugquerachse (Y-Verschiebung) der äußeren Bereiche (Flanschbereiche) des Querträgers, die teilweise stark ausgeprägt ist. Da die äußeren Bereiche des Querträgers, also die Bereiche, die in den Längsträger eingesteckt sind, im allgemeinen in Richtung der Fahrzeugquerachse (Y-Richtung) durch eine Schweißverbindung, Schrauben etc. fest eingespannt sind, wird die Torsionssteifigkeit des Querträgers in unerwünschter Weise erhöht. Im Endeffekt ist folglich der zu erzielende Stabilisatoreffekt durch die hohe Steifigkeit ebenfalls zu hoch.

Der Erfindung liegt daher die Aufgabe zugrunde, eine Verbundlenker-Hinterachse der eingangs genannten Art derart auszugestalten und weiterzubilden, daß die Torsionssteifigkeit des Querträgers verringert und der erzielte Stabilisatoreffekt erhöht ist.

Die zuvor genannte Aufgabe ist nun dadurch gelöst, daß die Steckverbindung als eine Art Gleitlager ausgebildet ist, so daß im Bereich der Steckverbindung eine geringe Verschiebung des Querträgers im wesentlichen in Richtung seiner zur Fahrzeugquerachse korrespondierenden Längsrichtung ermöglicht ist. Dadurch, daß nun die Steckverbindung eine geringe, gleitende Bewegung der äußeren Bereiche des Querträgers in Richtung der Fahrzeugachse ermöglicht, ist die Torsionssteifigkeit des Querträgers verringert und damit ebenfalls der Stabilisatoreffekt auf das richtige Maß verringert. Durch eine geringfügig gleitende Bewegung der äußeren Bereiche des Querträgers in Richtung der Fahrzeugquerachse (Y-Richtung) können die eingangs beschriebenen Nachteile vermieden werden.

Es gibt nun eine Vielzahl von Möglichkeiten, die erfindungsgemäße Verbundlenker-Hinterachse in vorteilhafte Weise auszugestalten und weiterzubilden. Hierfür darf an dieser Stelle auf die dem Patentanspruch 1 nachgeordneten Ansprüche verwiesen werden. Im übrigen wird nun eine Ausführungsform der Erfindung anhand einer Zeichnung näher erläutert. In der Zeichnung zeigt
FIG. 1 teilweise die erfindungsgemäße Verbundlenker-Hinterachse in einer Draufsicht,
FIG. 2 eine Ansicht im Schnitt entlang der Linie II-II in FIG. 1.

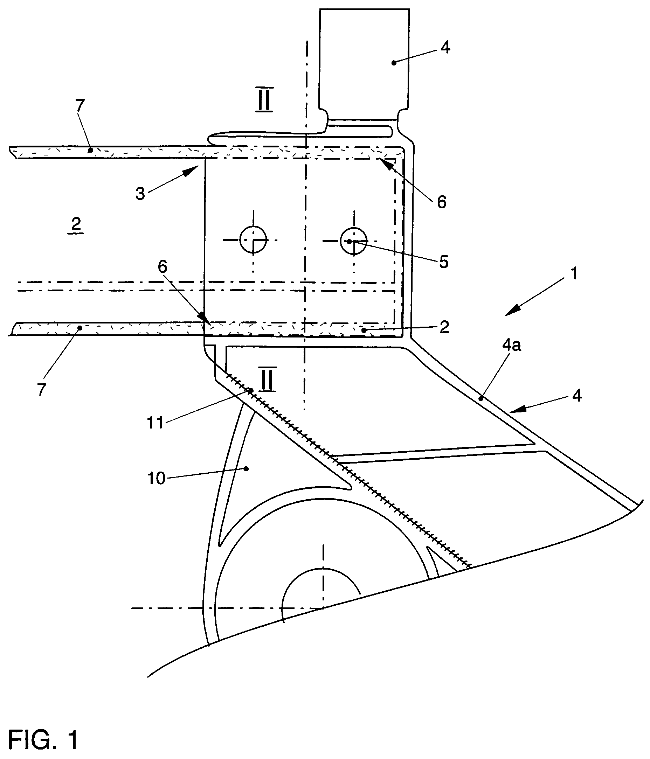

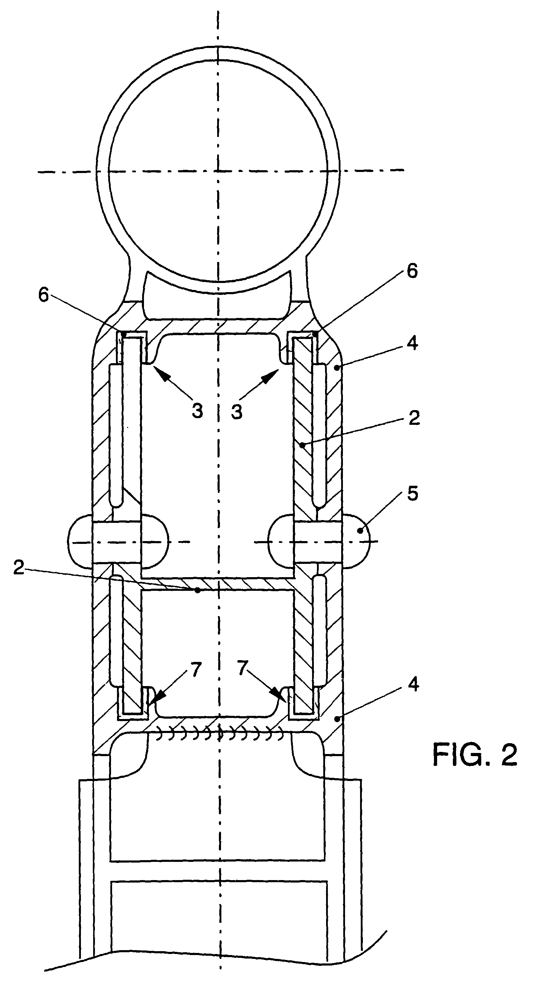

Die FIG. 1 und 2 zeigen eine Verbundlenker-Hinterachse 1 mit einem biegesteifen und torsionsweichen Querträger 2. An jedem Ende des hier nur teilweise dargestellten Querträgers 2 ist mit Hilfe einer Steckverbindung 3 ein Längsträger 4 angeordnet. Jeder Längsträger 4 ist so ausgebildet, daß ein Ende zur Aufnahme eines nicht näher bezeichneten Radträgers geeignet ist und das andere Ende an einen Fahrzeugaufbau anlenkbar ist. Der Querträger 2 ist biegesteif, aber torsionsweich ausgelegt, so daß er sich gegenüber an den Rädern angreifenden Quer- oder Längskräften starr verhält, aber gegenüber in Fahrzeug-Hochrichtung verlaufenden Ein- und Ausfederbewegungen wie ein Stabilisator wirkt.

Entscheidend ist nun, daß die Steckverbindung 3 als eine Art Gleitlager ausgebildet ist, so daß im Bereich der Steckverbindung 3 eine geringe Verschiebung des Querträgers 2 im wesentlichen in Richtung seiner zur Fahrzeugquerachse korrespondierenden Längsrichtung ermöglicht ist. Dies ist in FIG. 1 durch die entsprechenden Pfeile angedeutet. Aufgrund dieser Ausbildung der Steckverbindung 3 können die eingangs beschriebenen Nachteile vermieden werden, so daß die Torsionssteifigkeit des Querträgers 2 verringert und der im Endeffekt erreichte Stabilisatoreffekt verringert ist. Zur Verdeutlichung der entsprechenden Bewegungsrichtungen ist ein Koordinatensystem in FIG. 1 angedeutet, wobei die X-Richtung die Fahrtrichtung, die Y-Richtung die Fahrzeugquerachse und die Z-Richtung die Fahrzeug-Hochrichtung andeuten soll.

Grundsätzlich ist der Querträger 2 und jeder Längsträger 4 aus Leichtmetall oder einer Leichtmetall-Legierung, vorzugsweise aus Aluminium oder einer Aluminium-Legierung hergestellt. Der Querträger 2 kann, wie auch der Längsträger 4, als Strangpreßteil ausgeführt sein.

Um eine sichere Steckverbindung zwischen dem Querträger 2 und dem Längsträger 4 zu gewährleisten, wird im Bereich der Steckverbindung 3 zur Verbindung des Querträgers 2 und des Längsträgers 4 zusätzlich mindestens eine punktförmig wirkende Verbindung 5 vorgesehen. FIG. 2 zeigt, daß die hier punktförmig wirkende Verbindung 5 als eine Nietverbindung ausgeführt ist. Denkbar ist auch eine punktförmig wirkende Verbindung 5, die als Schraubverbindung ausgeführt ist. Entscheidend ist aber hierbei, daß diese punktförmig wirkende Verbindung 5 keine Fixierung des Querträgers 2 in y-Richtung realisiert bzw. eine Bewegung der äußeren Bereiche des Querträgers 2 in y-Richtung noch derartig gewährleistet ist, daß die gleitende Lagerung entsprechend realisiert ist.

Wie sowohl aus FIG. 1 als auch aus FIG. 2 ersichtlich ist, ist der Querträger 2 in dem hier dargestellten Fall in den Längsträger 4 eingesteckt.

Insbesondere FIG. 2 zeigt deutlich, daß der Querträger 2 zumindest im Bereich der Steckverbindung 3 als Doppel-T-Profil ausgebildet ist. Es sind auch andere Ausführungsformen für den Querträger 2 durchaus denkbar. Hierbei ist entscheidend, daß zur Realisierung der Steckverbindung 3 der Querträger 2 mindestens eine erste Führungsfläche und der Längsträger 4 mindestens eine zweite Führungsfläche aufweist, damit eine entsprechende Gleitlagerung entlang der jeweiligen Führungsflächen realisiert werden kann. Beispielsweise kann der Längsträger 4 eine entsprechende Nut für den äußeren Bereich des Querträgers 2 aufweisen, so daß hierdurch mindestens eine zweite Führungsfläche gebildet ist.

Aus FIG. 2 ist nun die bevorzugte Ausführungsform der Steckverbindung 3 ersichtlich. Der Längsträger 4 weist mehrere zu dem Doppel-T-Profil des Querträgers 2 korrespondierende Nuten 6 auf. Die erste Führungsfläche des Querträgers 2 (bzw. die ersten Führungsflächen) sind folglich durch die entsprechenden Außenseiten des Doppel-T-Profils des Querträgers 2 gebildet. Die zweiten Führungsflächen des jeweiligen Längsträgers 4 sind durch die Oberflächen der entsprechenden Nuten 6 gebildet. Zur Realisierung der gleitenden Lagerung kann nun die erste und/oder die zweite Führungsfläche eine die gleitende Lagerung ermöglichende Beschichtung 7 aufweisen. In dem bevorzugten Ausfhhrungsbeispiel ist die Beschichtung 7 als Teflon-Beschichtung ausgefhhrt. Hierbei ist zumindest der zu den Nuten 6 korrespondierende Bereich des T-Profils des Querträgers 2 mit einer Beschichtung 7, nämlich Teflon-Beschichtung versehen. Denkbar ist auch, daß die Nuten 6 bzw. die Oberflächen der Nuten 6 mit einer entsprechenden Beschichtung 7, nämlich einer Teflon-Beschichtung versehen sind. Dies kann je nach Anwendungsfall ganz unterschiedlich sein, wobei auch eine entsprechende Kombination denkbar ist.

Gemäß FIG. 1 ist der Längslenker als Gußteil ausgeführt, der ein U-Profil darstellt. Dabei ist der Boden 4a in FIG. 1 senkrecht, während das in FIG. 1 links liegende offene Profil im oberen Bereich den Querträger aufnimmt und im unteren Bereich mit einem Federteller 10 über die Schweißnaht 11 verschlossen ist.

Auf diese Weise kann eine Verbundlenker-Hinterachse aus im wesentlichen drei Aluminiumstrangpreßteilen kostengünstig fest und sicher hergestellt werden, wobei die beschriebenen Vorteile erzielbar sind.

Durch die Realisierung der gleitenden Lagerung, nämlich durch die Teflon-Beschichtung, wird eine entsprechende Gleitfähigkeit erreicht. Die nutartige Führung kann dann nur noch in Richtung der X- und der Z-Achse Reaktionskräfte abstützen. Für die Gesamtabstützung aller eingeleiteten Momente und Kräfte dient ergänzend bzw. zusätzlich die Vernietung. Durch eine derartige Ausgestaltung der Steckverbindung 3 ist es möglich, auf eine Schweißverbindung in diesen kritischen Bereichen zu verzichten, da besonders bei Leichtmetallen mit Festigkeitsdefiziten in der schweißbeeinflußten Zone zu rechnen ist.

## Patentansprüche

1. Verbundlenker-Hinterachse (1) mit einem biegesteifen und torsionsweichen Querträger (2), wobei an jedem Ende des Querträgers (2) mit Hilfe einer Steckverbindung (3) ein Längsträger (4) angeordnet ist und jeder Längsträger (4) einenends zur Aufnahme eines Radträgers und anderenends zur Anlenkung an einen Fahrzeugaufbau entsprechend ausgebildet ist, **dadurch gekennzeichnet**, daß die Steckverbindung (3) als eine Art Gleitlager ausgebildet ist, so daß im Bereich der Steckverbindung (3) eine geringe Verschiebung des Querträgers (2) im wesentlichen in Richtung seiner zur Fahrzeugquerachse korrespondierenden Längsrichtung ermöglicht ist.

2. Verbundlenker-Hinterachse nach dem vorhergehenden Anspruch, **dadurch gekennzeichnet**, daß der Querträger (2) und jeder Längsträger (4) aus Leichtmetall oder einer Leichtmetall-Legierung, vzw. aus Aluminium oder einer Aluminium-Legierung hergestellt sind.

3. Verbundlenker-Hinterachse nach einem der vorhergehenden Ansprüche, **dadurch gekennzeichnet**, daß im Bereich der Steckverbindung (3) zur Verbindung des Quer- und Längsträgers (2,4) zusätzlich mindestens eine punktförmig wirkende Verbindung (5) vorgesehen ist.

4. Verbundlenker-Hinterachse nach einem der vorhergehenden Ansprüche, **dadurch gekennzeichnet**, daß die punktförmig wirkende Verbindung (5) als eine Niet- oder eine Schraubverbindung ausgeführt ist.

5. Verbundlenker-Hinterachse nach einem der vorhergehenden Ansprüche, **dadurch gekennzeichnet**, daß der Querträger (2) ein Strangpreßteil.

6. Verbundlenker-Hinterachse nach einem der vorhergehenden Ansprüche, **dadurch gekennzeichnet**, daß der Längsträger (4) ein Strangpreßteil oder ein Gußteil ist.

7. Verbundlenker-Hinterachse nach einem der vorhergehenden Ansprüche, **dadurch gekennzeichnet**, daß der Querträger (2) in den Längsträger (4) eingesteckt ist.

8. Verbundlenker-Hinterachse nach einem der vorhergehenden Ansprüche, **dadurch gekennzeichnet**, daß der Querträger (2) zumindest im Bereich der Steckverbindung (3) als Doppel-T-Profil ausgebildet ist.

9. Verbundlenker-Hinterachse nach einem der vorhergehenden Ansprüche, **dadurch gekennzeichnet**, daß zur Realisierung der Steckverbindung (3) der Querträger (2) mindestens eine erste Führungsfläche und der Längsträger (4) mindestens eine zweite Führungsfläche aufweist.

10. Verbundlenker-Hinterachse nach einem der vorhergehenden Ansprüche, **dadurch gekennzeichnet**, daß der Längsträger (4) eine Nut (6) aufweist und hierdurch mindestens eine zweite Führungsfläche gebildet ist.

11. Verbundlenker-Hinterachse nach einem der vorhergehenden Ansprüche, **dadurch gekennzeichnet**, daß der Längsträger (4) mehrere zu dem Doppel-T-Profil des Querträgers (2) korrespondierende Nuten (6) aufweist.

12. Verbundlenker-Hinterachse nach einem der vorhergehenden Ansprüche, **dadurch gekennzeichnet**, daß zur Realisierung der gleitenden Lagerung die erste und /oder die zweite Führungsfläche eine die gleitende Lagerung ermöglichende Beschichtung (7) aufweist.

13. Verbundlenker-Hinterachse nach einem der vorhergehenden Ansprüche, **dadurch gekennzeichnet**, daß die Beschichtung (7) als Teflon-Beschichtung ausgeführt ist.

14. Verbundlenker-Hinterachse nach einem der vorhergehenden Ansprüche, **dadurch gekennzeichnet**, daß die Nut (6) bzw. die Nuten (6) vollständig mit einer Teflon-Beschichtung versehen sind.

15. Verbundlenker-Hinterachse nach einem der vorhergehenden Ansprüche, **dadurch gekennzeichnet**, daß zumindest der zu den Nuten (6) korrespondierende Bereich des T-Profils des Querträgers (2) mit einer Teflon-Beschichtung versehen ist.
